# EUROPEAN PATENT APPLICATION

(11) **EP 3 922 760 A1**
(43) Date of publication of application: **15.12.2021**
(21) Application number: 20822260.4
(22) Date of filing: 28.04.2020
(51) Int. Cl.: C25B 11/06, B01J 31/26, B01J 37/03, C01G 53/00, C25B 9/16

(54) **LAYERED DOUBLE HYDROXIDE, CATALYST FOR WATER ELECTROLYSIS CELLS, WATER ELECTROLYSIS CELL, WATER ELECTROLYSIS DEVICE, AND LAYERED DOUBLE HYDROXIDE PRODUCTION METHOD**

(30) Priority: 10.06.2019 JP 2019107644
(71) Applicant: Panasonic Intellectual Property Management Co., Ltd., Osaka-shi, Osaka 540-6207 (JP)
(72) Inventor: KOSHIKAWA, Hiroyuki, Osaka-shi (JP); MURASE, Hideaki, Osaka-shi (JP); HAYASHI, Takao, Osaka-shi (JP); NAKAJIMA, Kosuke, Osaka-shi (JP); SHIRAISHI, Seigo, Osaka-shi (JP)
(74) Representative: Grünecker Patent- und Rechtsanwälte PartG mbB
(86) International application number: PCT/JP2020/018057
(87) International publication number: WO 2020/250590

(57) **Abstract**

The present disclosure provides a layered double hydroxide that can exhibit a higher catalytic activity than before in an anode reaction of water electrolysis. The layered double hydroxide of the present disclosure includes two or more transition metals and a chelating agent and has an average particle diameter of 100 nm or less.

## Description

### Technical Field

The present disclosure relates a layered double hydroxide, a catalyst for a water electrolysis cell, a water electrolysis cell, a water electrolyzer, and a method for manufacturing a layered double hydroxide.

### Background Art

Hydrogen production by electrolysis of water (hereinafter, water electrolysis) is a technique effective for storing and utilizing surplus electric power derived from renewable energy with large output fluctuation, such as solar or wind energy, by converting the surplus electric power into hydrogen.

Here, when highly efficient hydrogen production is implemented by water electrolysis, the magnitude of overvoltage of the oxygen evolution reaction that proceeds at the anode in water electrolysis (hereinafter, it may be abbreviated as "anode reaction of water electrolysis") is regarded as a problem. Accordingly, highly active catalyst materials for an anode reaction of water electrolysis are being developed.

Specifically, a layered double hydroxide (hereinafter, it may be abbreviated to "LDH") can increase its specific surface area, and the combination of metal ions is diverse. Accordingly, the layered double hydroxide is attracting attention as a promising catalyst material for an anode reaction of water electrolysis, and various reports have been made.

For example, it is generally known that an LDH including two or more transition metals as components is synthesized by making an aqueous solution containing the transition metals alkaline and that an LDH functions as a catalyst for an anode reaction of water electrolysis.

In addition, NPL 1 has reported that LDH nanoparticles having an average particle diameter of 10 nm or less can be formed by ultrasonic grinding and that the catalytic activity on an anode reaction of water electrolysis is improved by using the LDH nanoparticles as a catalyst material.

### Citation List

### Non Patent Literature

NPL 1: Yufei Zhao et al., "Sub-3 nm Ultrafine Monolayer Layered Double Hydroxide Nanosheets for Electrochemical Water Oxidation", Advanced Energy Materials, Vol. 8, 1703585 (2018)

NPL 2: Yasuaki Tokudome et al., "Layered Double Hydroxide Nano clusters: Aqueous, Concentrated, Stable, and Catalytically Active Colloids toward Green Chemistry", American Chemical Society Nano, 2016, 10, 5550-5559

### Summary of Invention

### Technical Problem

A purpose of the present disclosure is to provide, as an example, an LDH that can exhibit a higher catalytic activity than before in an anode reaction of water electrolysis.

### Solution to Problem

In order to achieve the purpose described above, the LDH of one aspect of the present disclosure includes two or more transition metals and a chelating agent and has an average particle diameter of 100 nm or less.

### Advantageous Effects of Invention

The LDH of one aspect of the present disclosure can cause an effect of exhibiting a higher catalytic activity than before in an anode reaction of water electrolysis.

### Brief Description of Drawings

[Fig. 1] Fig. 1 is a diagram showing an example of a method for synthesizing a general LDH including two transition metals by a precipitation method.
[Fig. 2] Fig. 2 is a diagram showing an example of a process for synthesizing Ni-AI-based LDH nanoparticles disclosed in a conventional example.
[Fig. 3] Fig. 3 is a diagram showing an example of a synthesis mechanism of LDH nanoparticles of the present disclosure.
[Fig. 4] Fig. 4 is a diagram of showing an example of the crystal structure of an LDH.
[Fig. 5] Fig. 5 is a diagram of showing an example of the LDH nanoparticles (primary particle) of First Embodiment.
[Fig. 6] Fig. 6 is a diagram of showing an example of the water electrolysis cell of Fifth Embodiment.
[Fig. 7] Fig. 7 is a diagram showing an example of the water electrolyzer of Sixth Embodiment.
[Fig. 8] Fig. 8 is a graph showing an example of the XRD spectrum of the sample obtained in Example 1.
[Fig. 9] Fig. 9 is a graph showing an example of the particle size distribution of the sample obtained in Example 1.

### Description of Embodiments

As a result of diligent study to improve the catalytic activity of LDHs, it was found that an LDH with two or more transition metals as components improves its catalytic activity by including a chelating agent.

That is, an LDH of a first aspect of the present disclosure includes two or more transition metals and a chelating agent and has an average particle diameter of 100 nm or less.

In such a configuration, the LDH of the present aspect can exhibit a higher catalytic activity than before in an anode reaction of water electrolysis.

For example, the LDH of the present aspect can exhibit a high catalytic activity in an anode reaction of water electrolysis by including a chelating agent, compared to the case of not containing a chelating agent (for example, NPL 1).

In addition, the LDH of the present aspect can appropriately improve the catalytic activity by having an average particle diameter of 100 nm or less, compared to the case of an average particle diameter larger than 100 nm.

In an LDH of a second aspect of the present disclosure, the average particle diameter of the LDH of the first aspect may be 50 nm or less.

In such a configuration, since the average particle diameter of the LDH is smaller, the specific surface area of the LDH (catalyst surface area per unit mass) is increased, and the activity is increased.

In an LDH of a third aspect of the present disclosure, the average particle diameter of the LDH of the first or second aspect may be 10 nm or less.

In such a configuration, since the average particle diameter of the LDH is smaller, the specific surface area of the LDH (catalyst surface area per unit mass) is increased, and the activity is increased.

In an LDH of a fourth aspect of the present disclosure, the two or more transition metals in the LDH of any one of the first to third aspects may be two or more metals selected from V, Cr, Mn, Fe, Co, Ni, Cu, W, and Ru.

In an LDH of a fifth aspect of the present disclosure, the two or more transition metals in the LDH of any one of the first to fourth aspects may include either Ni or Fe.

It is known that among transition metals, nickel (Ni) and iron (Fe) have a particularly high catalytic activity for an anode reaction of water electrolysis. Accordingly, the LDH of the present aspect can exhibit a high catalytic activity in an anode reaction of water electrolysis by containing either Ni or Fe, compared to the case of selecting other transition metals. In addition, since Ni and Fe are elements existing in abundance, the LDH of the present aspect can reduce the material cost by containing either Ni or Fe, compared to the case of selecting other transition metals.

In an LDH of a sixth aspect of the present disclosure, the two or more transition metals in the LDH of any one of the first to fifth aspects may be composed of Ni and Fe, and the ratio of the amount of Fe to the total amount of Ni and Fe may be 0.25 or more and 0.5 or less.

In such a configuration, the LDH of the present aspect can exhibit a high catalytic activity in an anode reaction of water electrolysis by containing Ni and Fe such that the ratio is within a range of 0.25 or more and 0.5 or less, compared to the case that the ratio is without the above-mentioned range.

In an LDH of a seventh aspect of the present disclosure, the chelating agent in the LDH of any one of the first to sixth aspects may include either acetylacetone or citrate such as trisodium citrate.

In an LDH of an eighth aspect of the present disclosure, the chelating agent in the LDH of any one of the first to seventh aspects may be acetylacetone, and the absorbance at 300 nm may be 0.75 or more and 1.0 or less when the optical path length is 10 mm in ultraviolet-visible absorption spectroscopy (UV-vis).

When the amount of the coordinated chelating agent corresponds to an absorbance of 0.75 or more and 1.0 or less at 300 nm in ultraviolet-visible absorption spectroscopy (UV-vis), it is possible to obtain an effect of inhibiting aggregation of the LDH. In addition, it is also possible to obtain an effect of suppressing the reaction inhibition by the chelating agent when the LDH is used as a catalyst material.

In an LDH of a ninth aspect of the present disclosure, the average particle diameter, obtained by a small angle X-ray scattering method (SAXS), of the LDH of any one of the first to eighth aspects may be 100 nm or less.

In such a configuration, the LDH of the present aspect can appropriately improve the catalytic activity by having an average particle diameter of 100 nm or less obtained by a small angle X-ray scattering method (SAXS), compared to the case of an average particle diameter larger than 100 nm.

In an LDH of a 10th aspect of the present disclosure, the LDH of any one of the first to ninth aspects may be represented by a compositional formula: [M²⁺₁₋ₓM³⁺ₓ(OH)₂][yAⁿ⁻·mH₂O], and the chelating agent may be coordinated to the two or more transition metals. In this compositional formula, M²⁺ a is divalent transition metal, M³⁺ is a trivalent transition metal, Aⁿ⁻ is an intercalating anion, m is an appropriate rational number, n is an integer, x is a rational number not exceeding 1, and y is a number corresponding to the charge balance requirement.

A catalyst for a water electrolysis cell of an 11th aspect of the present disclosure may include the LDH of any one of the first to 10th aspects.

In such a configuration, the catalyst for a water electrolysis cell of the present aspect can exhibit a higher catalytic activity than before in an anode reaction of water electrolysis.

A water electrolysis cell of a 12th aspect of the present disclosure may include a positive electrode containing the catalyst according to the 11th aspect, a negative electrode, and an electrolyte.

In such a configuration, the water electrolysis cell of the present aspect can exhibit a higher catalytic activity than before in an anode reaction of water electrolysis. Since the chelating agent remains in the catalyst even in a state of a water electrolysis cell, the aggregation of the catalyst is inhibited, and the number of catalytic active sites is increased. Consequently, the energy conversion efficiency of the water electrolysis is improved.

A water electrolysis cell of a 13th aspect of the present disclosure may include a positive electrode, a negative electrode containing the catalyst according to the 11th aspect, and an electrolyte.

A water electrolyzer of a 14th aspect of the present disclosure may include a water electrolysis cell of the 12th or 13th aspect and a voltage application unit that applies a voltage to the positive electrode and the negative electrode.

In such a configuration, the water electrolyzer of the present aspect can exhibit a higher catalytic activity than before in an anode reaction of water electrolysis. Since the chelating agent remains in the catalyst even in a state of a water electrolysis cell, the aggregation of the catalyst is inhibited, and the number of catalytic active sites is increased. Consequently, the energy conversion efficiency of the water electrolysis is improved.

A method for manufacturing an LDH of a 15th aspect of the present disclosure includes a step of preparing an aqueous solution containing ions of two or more transition metals and a chelating agent and a step of making the aqueous solution alkaline.

According to the above, the method for manufacturing an LDH of the present aspect can provide an LDH exhibiting a higher catalytic activity than before in an anode reaction of water electrolysis.

For example, the method for manufacturing an LDH of the present aspect can provide an LDH exhibiting a high catalytic activity in an anode reaction of water electrolysis by including a chelating agent, compared to the case of not including a chelating agent.

A method for manufacturing an LDH of a 16th aspect of the present disclosure may further include a step of increasing the pH of the alkaline aqueous solution in the method for manufacturing an LDH in the 15th aspect.

In a method for manufacturing an LDH of a 17th aspect of the present disclosure, the aqueous solution may be made alkaline at ordinary temperature in the method for manufacturing an LDH of the 15th aspect.

In a method for manufacturing an LDH of an 18th aspect of the present disclosure, the pH of the alkaline aqueous solution may be increased at ordinary temperature in the method for manufacturing an LDH of the 16th aspect.

According to the above, the method for manufacturing an LDH of the present aspect performs the process of synthesizing the LDH at ordinary temperature, and thereby the chelating agent coordinated to the transition metal ions is inhibited from being desorbed and decomposed by heat.

In a method for manufacturing an LDH of a 19th aspect of the present disclosure, the two or more transition metals in the method for manufacturing an LDH of any one of the 15th to 18th aspects may be two or more metals selected from V, Cr, Mn, Fe, Co, Ni, Cu, W, and Ru.

In a method for manufacturing an LDH of a 20th aspect of the present disclosure, the two or more transition metals in the method for manufacturing an LDH of any one of the 15th to 19th aspects may include either Ni or Fe.

It is known that nickel (Ni) and iron (Fe) have a particularly high catalytic activity for an anode reaction of water electrolysis among transition metals. Accordingly, the method for manufacturing an LDH of the present aspect can provide an LDH exhibiting a high catalytic activity in an anode reaction of water electrolysis by containing either Ni or Fe, compared to the case of selecting other transition metals. In addition, since Ni and Fe are elements existing in abundance, the method for manufacturing an LDH of the present aspect can reduce the material cost by containing either Ni or Fe, compared to the case of selecting other transition metals.

Regarding the method for producing an LDH material of the present disclosure, the following studies were carried out for the purpose of forming nanoparticles of an LDH.

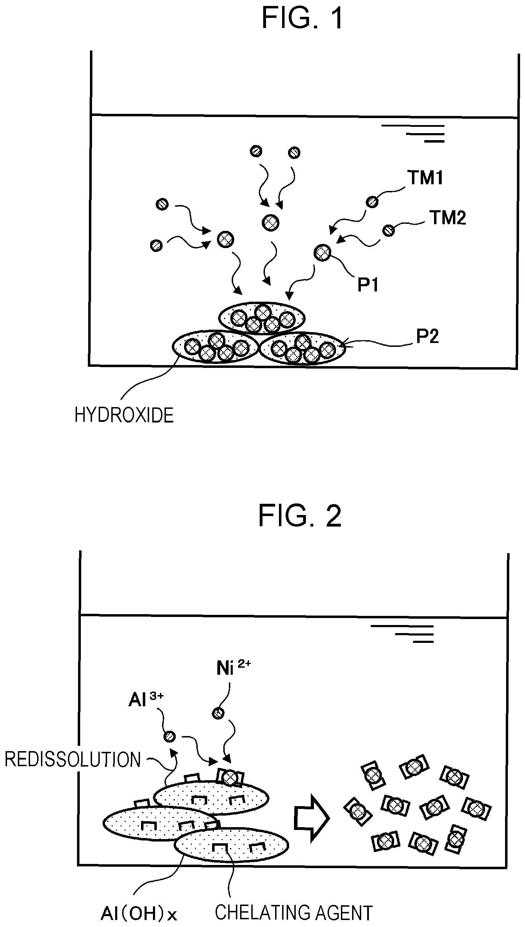

First, a method for synthesizing a general LDH including two transition metals by a precipitation method will be described with reference to Fig. 1.

As shown in Fig. 1, LDH primary particles P1 with transition metals, TM1 and TM2, as components are synthesized by making an aqueous solution containing the two transition metals, TM1 and TM2, alkaline. Incidentally, since such a synthesis method is generally known, detailed description thereof is omitted.

Incidentally, in this general synthesis method, as shown in Fig. 1, the LDH primary particles P1 (particle diameter: 10 nm or less) tend to gather together for reducing the surface energy thereof and form LDH secondary particles P2 (particle diameter: several hundred nm). Accordingly, the specific surface area of the LDH secondary particles P2 is reduced compared to that of the LDH primary particles P1, resulting in a problem of decreasing the catalytic activity.

Accordingly, "ACS Nano, 10, 5550 (2016)" (hereinafter, conventional example) proposes a method for synthesizing an Ni-AI-based LDH nanoparticle by adding acetylacetone (ACAC) as a chelating agent to an aqueous solution containing an amphoteric element, aluminum (Al), and a transition element, nickel (Ni), and then making the aqueous solution alkaline. The conventional example discloses that Ni-AI-based LDH nanoparticles having a particle diameter of about 7.8 nm can be synthesized by thereby controlling the crystal growth and aggregation of the LDH primary particles.

Fig. 2 is a diagram showing an example of a process for synthesizing Ni-AI-based LDH nanoparticles disclosed in the conventional example.

As shown in Fig. 2, when the pH of an aqueous solution containing Ni ions (Ni²⁺), Al ions (Al³⁺), and a chelating agent is increased, first, Al precipitates as a hydroxide.

In this process, the chelating agent partially coordinates to Al hydroxide (AI(OH)x).

Then, when the pH of the aqueous solution is further increased, Ni starts to precipitate as a hydroxide, and simultaneously the amphoteric element Al is redissolved as an ion from Al hydroxide. On this occasion, the chelating agent has two functions. Firstly, the chelating agent has a function of promoting the redissolution of Al from Al hydroxide by decreasing the size of Al hydroxide. Secondly, the chelating agent has a function of controlling the crystal growth of HDL nanoparticles as a capping agent by coordinating to both the redissolved Al ions and the Ni ions in the aqueous solution. Consequently, the chelating agent can inhibit aggregation of the LDH nanoparticles.

The conventional example reports that Ni-AI-based LDH nanoparticles can be thus synthesized.

Incidentally, the present inventors have studied on synthesis of LDH nanoparticles with transition metals as components for the purpose of increasing the efficiency of an anode reaction of water electrolysis, but in such synthesis of an LDH, the same synthesis mechanism as that of the conventional example is unlikely to work. The reason thereof is that since a transition metal exhibiting a high activity for an anode reaction of water electrolysis is generally not an amphoteric element, redissolution of a transition metal from a transition metal hydroxide is unlikely to occur.

Accordingly, the present inventors have diligently studied and, as a result, have found that setting of the solubility of the complex of transition metals and a chelating agent in water and the addition concentration of the chelating agent in an aqueous solution to appropriate amounts is convenient for synthesis of LDH nanoparticles.

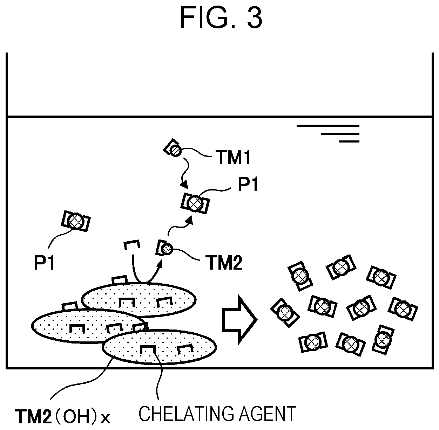

Fig. 3 is a diagram showing an example of a synthesis mechanism of LDH nanoparticles of the present disclosure. Incidentally, Fig. 3 shows a schematic diagram when two transition metals TM1 and TM2 are contained in an aqueous solution.

As shown in Fig. 3, when the pH of an aqueous solution containing a transition metal TM1 (ion), a transition metal TM2 (ion), and a chelating agent is increased, first, the transition metal TM2 precipitates as a hydroxide "TM2(OH)x".

Here, in order to synthesize LDH nanoparticles, it is necessary to synthesize an LDH by a reaction between ions of the transition metals in the aqueous solution, not by a reaction between a hydroxide of the transition metal TM2 and the transition metal TM1 in the solution.

Accordingly, the present inventors inferred that when the solubility of the complex of transition metals and a chelating agent in water is an appropriate amount or more, even if the transition metal TM 2 is hardly redissolved from the hydroxide, as shown in Fig. 3, the transition metal TM2 could be redissolved by trapping the transition metal TM2 with the chelating agent. That is, the present inventors inferred that when the solubility of the complex of transition metals and a chelating agent in water is an appropriate amount or more, the amount of the transition metal ions in an aqueous solution necessary for synthesis of LDH nanoparticles can be appropriately secured.

Specifically, it was inferred that when the solubility of the complex of transition metals and a chelating agent in water is 2 g/L or more, the amounts of ions of two or more transition metals in an aqueous solution necessary for synthesis of LDH nanoparticles can be suitably secured.

That is, in a method for manufacturing an LDH of a 21st aspect of the present disclosure, the solubility of the complex of transition metals and a chelating agent in water in the method for manufacturing an LDH of any one of the 15th to 20th aspects may be 2 g/L or more.

According to the above, the method for manufacturing an LDH of the present aspect can appropriately secure the concentration of transition metal ions in an aqueous solution necessary for LDH synthesis through a reaction between transition metal ions in the aqueous solution by that the solubility of the complex of the transition metals and the chelating agent in water is 2 g/L or more, compared to the case that the solubility is less than 2 g/L.

In a method for manufacturing an LDH of a 22nd aspect of the present disclosure, the chelating agent in the method for manufacturing an LDH of any one of the 15th to 21st aspects may include either acetylacetone or citrate.

It is generally known that the solubility of a complex of a transition metal and acetylacetone and the solubility of a complex of a transition metal and citrate are each 2 g/L or more. Accordingly, either acetylacetone or citrate can be used as the chelating agent in the method for manufacturing an LDH of the present aspect.

In addition, the present inventors inferred that when the addition concentration of the chelating agent in an aqueous solution is an appropriate amount or less, the transition metal TM1 to which the chelating agent partially coordinates and the transition metal TM2 to which the chelating agent partially coordinates easily react with each other. That is, it is inferred that when the addition concentration of the chelating agent in an aqueous solution is higher than an appropriate amount, there is a risk of causing a problem that the chelating agent coordinate to the transition metal TM1 and the transition metal TM2 to a degree that the reaction between the transition metals TM1 and TM2 is inhibited, but when the addition concentration of the chelating agent in an aqueous solution is an appropriate amount or less, such a problem can be reduced.

That is, in a method for manufacturing an LDH of a 23rd aspect of the present disclosure, the chelating agent in the method for manufacturing an LDH of any one of the 15th to 22nd aspects may be added at a concentration of 1/2.5 or less of the transition metal ion concentration.

According to the above, the method for manufacturing an LDH of the present aspect can provide an LDH exhibiting a high catalytic activity in an anode reaction of water electrolysis by adding a chelating agent at a concentration of 1/2.5 or less of the transition metal ion concentration, compared to the case of adding a chelating agent at a concentration higher than 1/2.5 of the transition metal ion concentration.

Embodiments of the present disclosure will now be specifically described with reference to drawings. Incidentally, the embodiments described below all show comprehensive or specific examples. Accordingly, the numbers, shapes, materials, components, arrangement positions and connection forms of components, and so on shown in the following embodiments are examples and are not intended to limit the present disclosure. In addition, among the components in the following embodiments, the components not described in the independent claims indicating the highest concept are described as optional components. In addition, in the drawings, those having the same reference numerals may omit the description thereof. In addition, in order to make the drawings easier to understand, each component is schematically shown, and the shape, the dimensional ratio, etc. may not be accurately displayed.

In addition, in the manufacturing method, the order of processes may be changed, and a known process may be added, as needed.

### (First Embodiment)

### [Configuration of LDH]

### <Crystal structure of LDH>

The LDH of the present embodiment includes two or more transition metals and a chelating agent. Incidentally, in the LDH of the present embodiment, the two or more transition metals may be two or more metals selected from V, Cr, Mn, Fe, Co, Ni, Cu, W, and Ru. The chelating agent is a ligand with multiple coordination positions, i.e., a multidentate ligand. Examples of the chelating agent include acetylacetone.

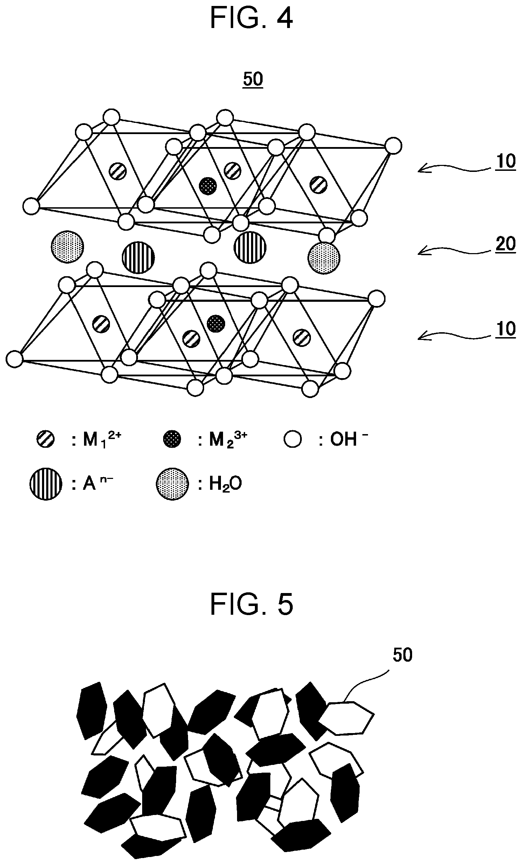

Here, Fig. 4 is a diagram showing an example of the crystal structure of an LDH.

Such an LDH is represented by a compositional formula: [M²⁺₁₋ₓM³⁺ₓ(OH)₂][yAⁿ⁻·mH₂O]. That is, in the LDH of the present embodiment, the chelating agent cooperates to the transition metals shown in the compositional formula.

Incidentally, in the compositional formula above, M²⁺ is a divalent transition metal, M³⁺ is a trivalent transition metal, Aⁿ⁻ is an intercalating anion, m is an appropriate rational number, n is an integer, x is a rational number not exceeding 1, and y is a number corresponding to the charge balance requirement.

As shown in Fig. 4, in the LDH, an OH⁻ ion is located at each vertex of an octahedron with M²⁺ and M³⁺ in the center, and a metal hydroxide (compositional formula: [M²⁺₁₋ₓM³⁺ₓ(OH)₂]) has a layered (sheet-like) structure in which the octahedrons share a ridge and are two-dimensionally connected to each other. In addition, anions and water molecules are located between two layers of this metal hydroxide. The layers of the metal hydroxide function as host layers 10, and the anions and the water molecules are inserted as a guest layer 20. That is, as a whole, the LDH has a structure in which a host layer 10 of a metal hydroxide and a guest layer 20 of anions and water molecules are alternately laminated.

### <LDH nanoparticle>

The LDH nanoparticles of the present embodiment have an average particle diameter of 100 nm or less. Specifically, the LDH of the present embodiment has a structure constituted of primary particles including a region of one or a plurality of minute single crystals and secondary particles formed by assembly of the primary particles. The average particle diameter is calculated from, for example, the particle size distribution (particle size distribution reflecting the particle diameters of the primary particles and the secondary particles) obtained by a small angle X-ray scattering method (SAXS). The average particle diameter may be 100 nm or less. In addition, the average particle diameter of the LDH nanoparticles of the present embodiment calculated above may be 50 nm or less or 10 nm or less. Incidentally, the details of the "average particle diameter" will be described in Examples.

Fig. 5 is a diagram of showing an example of the LDH nanoparticles (primary particle) of First Embodiment.

As shown in Fig. 5, the LDH nanoparticles 50 of the present embodiment are plate-shaped particles.

Here, when the LDH nanoparticles 50 of the present embodiment is used as a catalyst material of an anode reaction of water electrolysis, the active site is a transition metal cation and/or an oxygen anion crosslinking between transition metal cations, each of which includes an active site located at the outermost layer of the tabular LDH nanoparticle 50 and an active site located at the edge portion of the tabular LDH nanoparticle 50.

In general, as an index of evaluation of the catalytic activity of an electrode, the specific activity (the current value derived from a catalytic reaction per catalyst unit load) is used. A decrease in the particle diameter increases the specific surface area (catalyst surface area per unit mass) of the LDH, and the activity is therefore increased.

As described above, the LDH of the present embodiment can exhibit a higher catalytic activity than before in an anode reaction of water electrolysis.

For example, the LDH of the present embodiment can exhibit a high catalytic activity by containing a chelating agent in an anode reaction of water electrolysis, compared to the case of not containing a chelating agent (for example, NPL 1). Specifically, it was demonstrated that when an LDH containing a chelating agent is used as a catalyst for a water electrolysis cell, the oxygen evolution current of an anode reaction of water electrolysis increases, compared to the case of an LDH not containing a chelating agent. The details will be described in evaluation of Examples.

In addition, the LDH of the present embodiment can appropriately improve the catalytic activity by adjusting the average particle diameter to 100 nm or less, compared to the case of an average particle diameter larger than 100 nm. For example, the LDH of the present embodiment can appropriately improve the catalytic activity by adjusting the average particle diameter obtained by a small angle X-ray scattering method (SAXS) to 100 nm or less, compared to the case of an average particle diameter larger than 100 nm.

### [Method for manufacturing LDH]

The method for manufacturing an LDH of the present embodiment includes a step of preparing an aqueous solution containing ions of two or more transition metals and a chelating agent and a step of making the aqueous solution alkaline. Here, the two or more transition metals may be two or more metals selected from V, Cr, Mn, Fe, Co, Ni, Cu, W, and Ru.

Incidentally, in the former step, the transition metals and the chelating agent may be added to an aqueous solution in any order. In addition, the latter step may be a step of mixing the aqueous solution containing transition metals and a chelating agent and an alkaline aqueous solution or a step of adding a pH-raising agent to the aqueous solution containing transition metals and a chelating agent.

In addition, the method for manufacturing an LDH of the present embodiment may further include a step of increasing the pH of the alkaline aqueous solution. Specifically, this step may be a step of gradually increasing the pH of the alkaline aqueous solution.

For example, as such a step, a step in which an alkaline aqueous solution is gradually mixed with the aqueous solution containing transition metals and a chelating agent or a step in which the pH-raising agent added to such an aqueous solution is gradually dissolved in the aqueous solution can be exemplified.

Furthermore, in the method for manufacturing an LDH of the present embodiment, an aqueous solution containing ions of two or more transition metals and a chelating agent may be made alkaline at ordinary temperature. Alternatively, the pH of an alkaline aqueous solution containing ions of two or more transition metals and a chelating agent may be increased at ordinary temperature.

Consequently, the method for manufacturing an LDH of the present embodiment performs the process of synthesizing the LDH at ordinary temperature, and thereby the chelating agent coordinated to the transition metal ions is inhibited from being desorbed and decomposed by heat.

As described above, the method for manufacturing an LDH of the present embodiment can provide an LDH exhibiting a higher catalytic activity than before in an anode reaction of water electrolysis.

For example, the method for manufacturing an LDH of the present embodiment can provide an LDH exhibiting a high catalytic activity in an anode reaction of water electrolysis by including a chelating agent, compared to the case of not including a chelating agent. Specifically, it was demonstrated that when an LDH containing a chelating agent is used as a catalyst for a water electrolysis cell, the oxygen evolution current of an anode reaction of water electrolysis increases, compared to the case of an LDH not containing a chelating agent. The details will be described in evaluation of Examples.

### (Second Embodiment)

The LDH and the method for manufacturing an LDH of the present embodiment are the same as the LDH and the method for manufacturing an LDH of First Embodiment except that the two or more transition metals include either Ni or Fe.

It is known that among transition metals, nickel (Ni) and iron (Fe) have a particularly high catalytic activity for an anode reaction of water electrolysis. Accordingly, the LDH of the present embodiment can exhibit a high catalytic activity in an anode reaction of water electrolysis by containing either Ni or Fe, compared to the case of selecting other transition metals. In addition, since Ni and Fe are elements existing in abundance, the LDH and the method for manufacturing an LDH of the present embodiment can reduce the material cost by containing either Ni or Fe, compared to the case of selecting other transition metals.

Here, the two or more transition metals in the LDH of the present embodiment are composed of Ni and Fe, and the ratio of the amount of Fe to the total amount of Ni and Fe may be 0.25 or more and 0.5 or less.

It was demonstrated that when the transition metals in the LDH are composed of Ni and Fe, the LDH has a particularly high catalytic activity for an anode reaction of water electrolysis when the above-mentioned ratio is 0.25 or more and 0.5 or less. The details will be described in evaluation of Examples.

Accordingly, the LDH of the present embodiment can exhibit a high catalytic activity in an anode reaction of water electrolysis by containing Ni and Fe such that the ratio is within a range of 0.25 or more and 0.5 or less, compared to the case that the ratio is without the above-mentioned range.

The LDH and the method for manufacturing an LDH of the present embodiment are the same as those of First Embodiment except for the above-described characteristics.

### (Third Embodiment)

The LDH and the method for manufacturing an LDH of the present embodiment are the same as the LDH and the method for manufacturing an LDH of First Embodiment except that the chelating agent includes either acetylacetone (ACAC) or citrate, such as trisodium citrate and magnesium citrate.

Here, in the LDH of the present embodiment, the chelating agent may be ACAC, and the absorbance at 300 nm may be 0.75 or more and 1.0 or less when the optical path length is 10 mm in ultraviolet-visible absorption spectroscopy (UV-vis).

When *the amount of the coordinated chelating agent corresponds to* an absorbance of 0.75 or more and 1.0 or less at 300 nm in ultraviolet-visible absorption spectroscopy (UV-vis), it is possible to obtain an effect of inhibiting aggregation of the LDH nanoparticles. In addition, it is also possible to obtain an effect of suppressing the reaction inhibition by the chelating agent when the LDH is used as a catalyst material.

In addition, in the method for manufacturing an LDH of the present embodiment, the solubility of the complex of transition metals and a chelating agent in water may be 2 g/L or more.

Consequently, the method for manufacturing an LDH of the present embodiment can appropriately secure the concentration of transition metal ions in an aqueous solution necessary for LDH synthesis through a reaction between transition metal ions in the aqueous solution by that the solubility of the complex of the transition metals and the chelating agent in water is 2 g/L or more, compared to the case that the solubility is less than 2 g/L.

Incidentally, it is generally known that the solubility of a complex of a transition metal and ACAC and the solubility of a complex of a transition metal and citrate are each 2 g/L or more. Accordingly, either ACAC or citrate can be used as the chelating agent in the method for manufacturing an LDH of the present embodiment.

The LDH and the method for manufacturing an LDH of the present embodiment are the same as those of First or Second Embodiment except for the above-described characteristics.

### (Fourth Embodiment)

The method for manufacturing an LDH of the present embodiment is the same as the method for manufacturing an LDH of First Embodiment except that the chelating agent is added at a concentration of 1/2.5 or less of the transition metal ion concentration.

According to the above, the method for manufacturing an LDH of the present embodiment can provide an LDH exhibiting a high catalytic activity in an anode reaction of water electrolysis by adding a chelating agent at a concentration of 1/2.5 or less of the transition metal ion concentration, compared to the case of adding a chelating agent at a concentration higher than 1/2.5 of the transition metal ion concentration. For example, although it will be described in evaluation of Examples, it was demonstrated that when a chelating agent is added at a concentration of 1/2 of the transition metal ion concentration, it is difficult to form nanoparticles of the LDH.

The LDH and the method for manufacturing an LDH of the present embodiment are the same as those of any of First to Third Embodiments except for the above-described characteristics.

### (Fifth Embodiment)

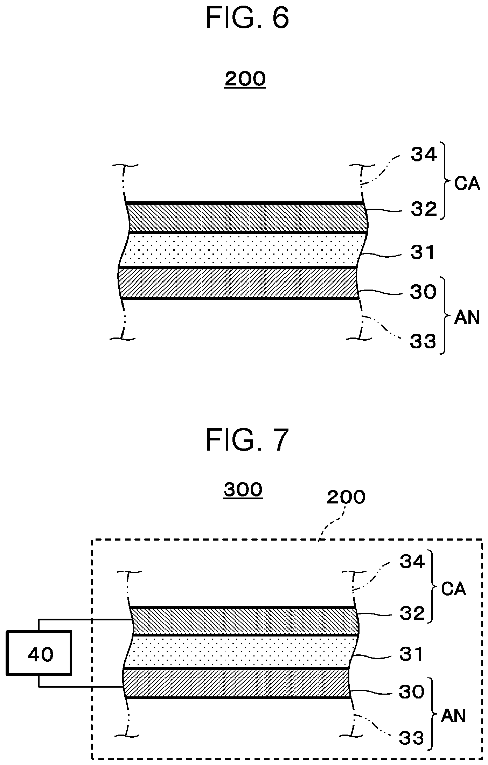

Fig. 6 is a diagram of showing an example of the water electrolysis cell of Fifth Embodiment.

In the example shown in Fig. 6, the water electrolysis cell 200 includes an electrolyte 31, a positive electrode AN, and a negative electrode CA.

The electrolyte 31 may be, for example, an electrolyte membrane having ion conductivity. For example, the electrolyte membrane may have any configuration as long as it has ion conductivity. As the electrolyte membrane, for example, Sustanion (trademark) thin membrane having anion exchangeability can be used.

The positive electrode AN includes a catalyst layer 30, and as shown by a two dot chain line in Fig. 6, a porous and conductive gas diffusion layer 33 may be disposed on the catalyst layer 30. Here, the catalyst layer 30 is disposed on one of the main surfaces of the electrolyte membrane. The catalyst of the catalyst layer 30 is a catalyst for a water electrolysis cell including the LDH of First Embodiment.

The negative electrode CA includes a catalyst layer 32, and as shown by a two dot chain line in Fig. 6, a porous and conductive gas diffusion layer 34 may be disposed on the catalyst layer 32. Here, the catalyst layer 32 is disposed on the other main surface of the electrolyte membrane. The catalyst layer 32 may include, for example, platinum (Pt) as a catalytic metal, but the catalytic metal is not limited thereto. For example, the catalyst of the catalyst layer 32 may be composed of the LDH of First Embodiment, as in the catalyst layer 30.

From the above, the water electrolysis cell 200 of the present embodiment can exhibit a higher catalytic activity than before in an anode reaction of water electrolysis. Since the chelating agent remains in the catalyst even in a state of a water electrolysis cell, the aggregation of the catalyst is inhibited, and the number of catalytic active sites is increased. Consequently, the energy conversion efficiency of the water electrolysis is improved.

The water electrolysis cell 200 of the present embodiment may be the same as that of any of First to Fourth Embodiments except for the above-described characteristics.

### (Sixth Embodiment)

Fig. 7 is a diagram showing an example of the water electrolyzer of Sixth Embodiment.

In the example shown in Fig. 7, the water electrolyzer 300 includes a water electrolysis cell 200 and a voltage application unit 40. Here, the water electrolysis cell 200 is the same as the water electrolysis cell 200 of Fifth Embodiment, and the description thereof is omitted.

The voltage application unit 40 is a device that applies a voltage to the positive electrode AN and the negative electrode CA of the water electrolysis cell 200.

Specifically, the high potential of the voltage application unit 40 is applied to the positive electrode AN, and the low potential of the voltage application unit 40 is applied to the negative electrode CA. The voltage application unit 40 may have any configuration as long as it can apply a voltage between the positive electrode AN and the negative electrode CA. For example, the voltage application unit 40 may be a device that regulates the voltage to be applied between the positive electrode AN and the negative electrode CA. Specifically, the voltage application unit 40 includes a DC/DC converter when being connected to a DC power supply, such as a battery, a solar cell, or a fuel cell, and includes an AC/DC converter when being connected to an AC power supply, such as a commercial power supply. In addition, the voltage application unit 40 may be, for example, an electricity power supply that regulates the voltage to be applied between the positive electrode AN and the negative electrode CA and the current flowing between the positive electrode AN and the negative electrode CA such that the power to be supplied to the water electrolyzer 300 is a predetermined value.

From the above, the water electrolyzer 300 of the present embodiment can exhibit a higher catalytic activity than before in an anode reaction of water electrolysis. The chelating agent remains in the catalyst even in a state of the water electrolyzer, and thereby the aggregation of the catalyst is inhibited, and the number of catalytic active sites is increased. Consequently, the energy conversion efficiency of the water electrolysis is improved.

The water electrolyzer 300 of the present embodiment may be the same as that of any of First to Fifth Embodiments except for the above-described characteristics.

### (Examples)

Samples of 1st to 9th Examples and Comparative Example 1 were produced by changing the molar ratio Q of ACAC to (Ni + Fe) (i.e., molar ratio Q = ACAC/(Ni + Fe)) and the molar ratio R of Fe to (Ni + Fe) (i.e., molar ratio R = Fe/(Ni + Fe)) as follows in the preparation of LDHs of the present example.

### (Example 1)

Nickel chloride hexahydrate (427.8 mg, purchased from FUJIFILM Wako Pure Chemical Corporation) and iron chloride hexahydrate (243.3 mg, purchased from FUJIFILM Wako Pure Chemical Corporation) were dissolved in a solvent mixture (volume ratio: 2 : 3) of water (671 µL) and ethanol (1007 µL, purchased from FUJIFILM Wako Pure Chemical Corporation) to prepare a solution. In the solution, the total concentration of ions of both metals was 1.0 M, and the ratio of the amount of Fe to the total amount of Ni and Fe (i.e., molar ratio R) was 0.33. ACAC (92 µL, purchased from Sigma-Aldrich) was added to the solution as a chelating agent. In the solution, the molar ratio of ACAC to the total amount of the ions of Ni and Fe (i.e., molar ratio Q) was one third. The solution was stirred for 30 minutes. Subsequently, propylene oxide (hereinafter, referred to as "POX", 915 µL, purchased from FUJIFILM Wako Pure Chemical Corporation) was added thereto as a pH-raising agent. The molar ratio of POX to the chloride ion in the solution was 2. The solution was stirred for 1 minute. On this occasion, since the POX gradually traps hydrogen ions in the solution, the pH of the solution was gradually increased. The solution was left to stand for 3 days, and the LDH of an objective sample was collected.

Incidentally, the above-described method for preparing an LDH is an example, and the method is not limited thereto.

### (Example 2)

An LDH was produced by the same procedure as in Example 1 except that the addition amount of ACAC was 138 µL, i.e., the addition amount of ACAC was 1/2 of the total amount of Ni and Fe.

### (Example 3)

An LDH was produced by the same procedure as in Example 1 except that the addition amount of ACAC was 110 µL, i.e., the addition amount of ACAC was 1/2.5 of the total amount of Ni and Fe.

### (Example 4)

An LDH was produced by the same procedure as in Example 1 except that the addition amount of ACAC was 79 µL, i.e., the addition amount of ACAC was 1/3.5 of the total amount of Ni and Fe.

### (Example 5)

An LDH was produced by the same procedure as in Example 1 except that the addition amount of ACAC was 74 µL, i.e., the addition amount of ACAC was 1/3.75 of the total amount of Ni and Fe.

### (Example 6)

An LDH was produced by the same procedure as in Example 1 except that the addition amounts of nickel chloride hexahydrate, iron chloride hexahydrate, and POX were 534.8 mg, 121.7 mg, and 850 µL, respectively, i.e., the ratio of the amount of Fe to the total amount of Ni and Fe was 0.17.

### (Example 7)

An LDH was produced by the same procedure as in Example 1 except that the addition amounts of nickel chloride hexahydrate, iron chloride hexahydrate, and POX were 481.3 mg, 182.5 mg, and 882 µL, respectively, i.e., the ratio of the amount of Fe to the total amount of Ni and Fe was 0.25.

### (Example 8)

An LDH was produced by the same procedure as in Example 1 except that the addition amounts of nickel chloride hexahydrate, iron chloride hexahydrate, and POX were 320.9 mg, 365.0 mg, and 980 µL, respectively, i.e., the ratio of the amount of Fe to the total amount of Ni and Fe was 0.50.

### (Example 9)

An LDH was produced by the same procedure as in Example 1 except that the addition amounts of nickel chloride hexahydrate, iron chloride hexahydrate, and POX were 213.9 mg, 486.6 mg, and 1046 µL, respectively, i.e., the ratio of the amount of Fe to the total amount of Ni and Fe was 0.67.

### (Comparative Example 1)

An LDH was produced by the same procedure as in Example 1 except that ACAC was not added.

Table 1 shows a list of parameters that were changed in Examples 1 to 9 and Comparative Example 1 above.

**[Table 1]**

| | Molar ratio Q of ACAC to (Ni + Fe) Q = ACAC/(Ni + Fe) | Molar ratio R of Fe to (Ni + Fe) R = Fe/(Ni + Fe) |
|---|---|---|
| Example 1 | Q = 1/3 | R = 0.33 |
| Example 2 | Q = 1/2 | R = 0.33 |
| Example 3 | Q = 1/2.5 | R = 0.33 |
| Example 4 | Q = 1/3.5 | R = 0.33 |
| Example 5 | Q = 1/3.75 | R = 0.33 |
| Example 6 | Q = 1/3 | R = 0.17 |
| Example 7 | Q = 1/3 | R = 0.25 |
| Example 8 | Q = 1/3 | R = 0.50 |
| Example 9 | Q = 1/3 | R = 0.67 |
| Comparative Example 1 | Q = 0 | R = 0.33 |

### (Example 10)

A membrane-electrode assembly (MEA) which is a catalyst layer on which the sample obtained in Example 1 was mounted was produced as follows.

The sample (LDH) of Example 1 and Ketjen black (KB) were dispersed in a solvent mixture of water and ethanol (mass ratio: 7 : 9) at a mass ratio of 2 : 1.

Subsequently, a 20 wt% Nafion (registered trademark) dispersion was added to this solution as a binder to produce a dispersion mixture of LDH/KB/Nafion (registered trademark) in which the mass of Nafion (registered trademark) was 0.3 times the total mass of LDH and KB.

Subsequently, refinement treatment was performed with a ball mill (ball diameter: 1.3 mm, rotation speed: 400 rpm, processing time: 80 min) and an ultrasonic homogenizer (processing time: 30 min) to produce an anode catalyst ink.

Subsequently, a cathode catalyst ink was produced by the same procedure as that in the anode catalyst ink except that the catalyst and the carrier were Pt and KB (mass ratio: 1 : 1).

Subsequently, these anode catalyst ink and cathode catalyst ink were respectively spray-applied onto carbon paper to produce gas diffusion electrodes (GDEs) as an anode and a cathode.

Subsequently, Sustanion (tradename) as an anion exchange membrane was put between the gas diffusion electrode as the anode and the gas diffusion electrode as the cathode to produce an MEA with a sandwich structure. An electrolysis experiment using a water electrolyzer equipped with the MEA was then performed. The details of the electrolysis experiment will be described in Evaluation 7.

Incidentally, in the water electrolyzer, equipment and members necessary for performing the electrolysis experiment were appropriately provided. For example, in addition to the MEA, a gasket for preventing leakage, a separator provided with a serpentine-shaped flow channel, an electric supply plate, an insulating plate, and a fixing jig provided with an inlet and an outlet for a solution were provided in the periphery of the MEA.

The configuration of the MEA and the configuration of the water electrolyzer described above are examples, and the configurations are not limited thereto.

### [Evaluation 1: Evaluation by time-course observation in solution]

In Example 1, the solution gelled within 1 hour after the addition of POX. It is inferred that this is because that the precipitation of a hydroxide of Fe was generated and grew with an increase in the pH of the solution. The solution was converted to sol again at about 36 hours after the addition of the POX. It is inferred that this is because that an LDH-forming reaction proceeded between the Fe-ACAC complex and Ni with an increase in the pH of the solution until the region causing precipitation of Ni, and thereby the reaction of dissolving Fe from the precipitate of the hydroxide of Fe due to ACAC continuously proceeded. That is, it is inferred that the occurrence of such resolation indicates that the LDH nanoparticles were synthesized while preventing aggregation of the LDH nanoparticles.

In Examples 3, 4, 6, 7, 8, and 9, although there were small differences in the reaction rate, the same phenomena as those in Example 1 were observed.

In contrast, in Examples 2 and 5 and Comparative Example 1, gelation of the solution occurred, but resolation was not caused.

Table 2 below shows a list of the results of Evaluation 1.

**[Table 2]**

| | Gelation | Resolation |
|---|---|---|
| Example 1 | ○ | ○ |
| Example 2 | ○ | X |
| Example 3 | ○ | ○ |
| Example 4 | ○ | ○ |
| Example 5 | ○ | X |
| Example 6 | ○ | ○ |
| Example 7 | ○ | ○ |
| Example 8 | ○ | ○ |
| Example 9 | ○ | ○ |
| Comparative Example 1 | ○ | X |

### [Evaluation 2: Evaluation by observation of dispersion state of sample]

The samples obtained in Examples 1 to 9 and Comparative Example 1 were each dispersed in a solvent mixture of water and ethanol (volume ratio of water and ethanol is 1 : 4), and the dispersion state of each of these samples was observed.

Each of the samples obtained in Examples 1, 3, 4, 6, 7, 8, and 9 did not generate solid precipitate and was dispersed in the solvent mixture to form an orange transparent colloid solution.

In contrast, the samples obtained in Examples 2 and 5 and Comparative Example 1 remained gelled and were difficult to collect, but were forcibly dried and collected and were dispersed in the solvent mixture. In the sample obtained in Comparative Example 1, an orange but turbid solution was formed, and a certain amount of particles precipitated on the bottom of the container. Since the sample obtained in Comparative Example 1 thus did not form a well dispersed colloid solution, it can be said that the particle size thereof is several hundred nm or more. On the other hand, in the samples obtained in Examples 2 and 5, such a precipitate as in the sample obtained in Comparative Example 1 was not observed. It is surmised from this that the particle diameters of the samples obtained in Examples 2 and 5 were not large as that of the sample obtained in Comparative Example 1.

From the above, it is inferred that the samples obtained in Examples 1, 3, 4, 6, 7, 8, and 9 have small average particle diameters, compared to the sample obtained in Comparative Example 1.

### [Evaluation 3: Identification and evaluation of substance]

The crystal phase of each sample was measured using an X-ray diffractometer (XRD: Malvern Panalytical Ltd., X'Pert PRO) under measurement conditions of a voltage of 45 kV, a current of 40 mA, and measurement range of 5° to 70° to obtain respective XRD profiles.

As a result, in all samples obtained in Examples 1, 3, 4, 6, 7, 8, and 9 and Comparative Example 1, peaks corresponding to the respective LDHs were observed.

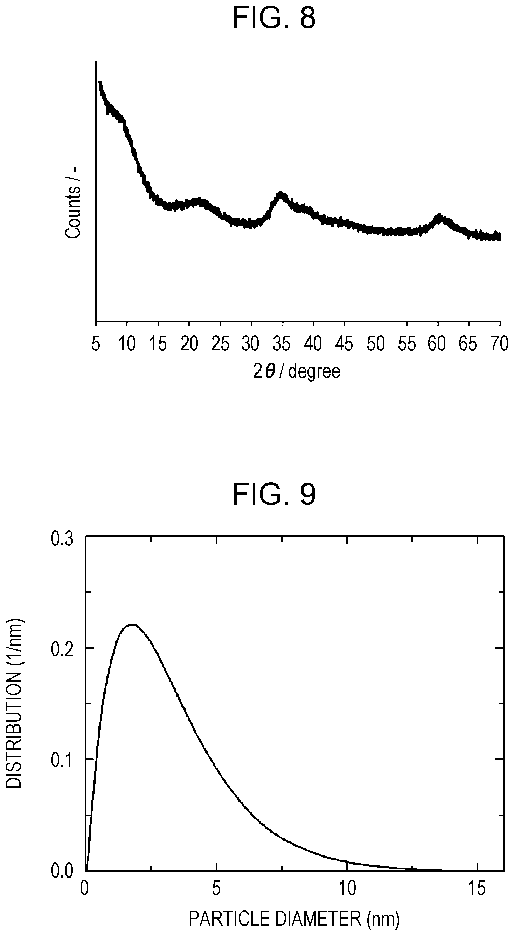

Incidentally, as an example, Fig. 8 is a graph showing an example of the XRD spectrum of the sample obtained in Example 1.

From the above, it was revealed that the samples obtained in Examples 1, 3, 4, 6, 7, 8, and 9 and Comparative Example 1 were LDHs.

Considering the results of Evaluations 1 and 2 above together with the results of Evaluation 3, it is inferred that LDH nanoparticles were appropriately synthesized while preventing aggregation of the LDH nanoparticles by appropriately setting the addition concentration of the chelating agent, and resolation of the solution proceeded in the synthesis process thereof.

### [Evaluation 4: Evaluation of particle diameter by SAXS]

The average particle diameter of the sample obtained in Example 1 was evaluated by a small angle X-ray scattering method (SAXS, SmartLab, Rigaku Corporation).

Fig. 9 is a graph showing an example of the particle size distribution (particle size distribution reflecting the particle diameters of primary particles and secondary particles) of the sample obtained in Example 1. The horizontal axis of Fig. 9 shows the particle size. The vertical axis of Fig. 9 shows the number of particles (arbitrary unit).

Here, the "average particle diameter" is the value obtained by dividing the area of a two-dimensional distribution diagram (i.e., the product of a particle diameter and the number of particles corresponding the particle diameter) by the total number of the particles, when in the particle size distribution obtained by the small angle X-ray scattering method (SAXS), the relationship between the particle diameter and the number of particles is represented as shown in Fig. 9.

Accordingly, the particle size distribution of the sample obtained in Example 1 was evaluated based on Fig. 9, and the average particle diameter was 7.2 nm.

In addition, similarly, the average particle diameters of the samples obtained in Examples 3, 4, 7, and 8 were 5.6 nm, 1.3 nm, 6.8 nm, and 6.0 nm, respectively.

The results above accord with the findings of the present inventors that LDH nanoparticles are appropriately synthesized while preventing aggregation of the LDH nanoparticles by appropriately setting the addition concentration of the chelating agent.

### [Evaluation 5: Evaluation by ultraviolet-visible absorption spectroscopy (UV-vis)]

The samples obtained in Examples 1, 3, and 4 and Comparative Example 1 were evaluated for whether or not ACAC was present and for the amount of ACAC when ACAC was present, by verifying the ultraviolet-visible absorption spectra of the samples obtained in Examples 1, 3, and 4 and Comparative Example 1 using an ultraviolet-visible absorption measuring apparatus (UV-vis, UV-3600Plus, manufactured by Shimadzu Corporation) under conditions of an optical path length of 10 mm.

As a result, absorption peak was observed at near 300 nm in the samples obtained in Examples 1, 3, and 4. As shown in Fig. 3(b) of NPL 2, a molecule of a chelate formed with ACAC has an absorption peak at a wavelength of about 300 nm in an ultraviolet-visible absorption spectrum by UV-vis. Accordingly, this peak is an absorption peak derived from ACAC coordinated to Fe and Ni. The absorbances of the peaks at near 300 nm of the samples obtained in Examples 1, 3, and 4 were 0.98, 1.00, and 0.76, respectively, and the results were that the absorbance was also increased with an increase in the addition concentration of ACAC in Table 1.

In contrast, in the sample obtained in Comparative Example 1, no absorption peak was observed at near 300 nm.

In addition, the ultraviolet-visible absorption spectra of the samples obtained in Examples 7 and 8 were also verified by UV-vis, and, similarly, absorption peaks were observed at near 300 nm. Thus, the presence of ACAC coordinated to Fe and Ni was observed also in these samples.

### [Evaluation 6: Evaluation of catalytic activity]

The samples obtained in Examples 1, 3, 4, 6, 7, 8, and 9 and Comparative Example 1 were evaluated as catalysts for a water electrolysis cell as follows.

In the evaluation, the current derived from the anode reaction (oxygen evolution reaction) of a water electrolysis cell was measured using a potentiostat (Princeton Applied Research, Versa STAT4) and a rotating disk electrode (RDE, Pine Research Instrumentation, Inc., electrode model No. AFE3T05 0GC) under the following conditions.

Solution: 1 M KOH solution
Potential: 1.1 to 1.65 V (vs. reversible hydrogen electrode (RHE))
Potential sweep rate: 10 mV/sec
Electrode rotation speed: 1500 rpm

Table 3 below shows an example of the relation between the oxygen evolution current (current density) at a potential of 1.65 V (vs. RHE) and the molar ratio R (i.e., the molar ratio of Fe to (Ni + Fe)) in LDHs.

**(Table 3)**

| | Molar ratio R | Current density [mA cm⁻²] |
|---|---|---|
| Example 1 | 0.33 | 200 |
| Example 6 | 0.17 | 127 |
| Example 7 | 0.25 | 200 |
| Example 8 | 0.50 | 221 |
| Example 9 | 0.67 | 159 |

As shown in Table 3, it was demonstrated that the samples obtained in Examples 1, 6, 7, 8, and 9 used as catalysts for a water electrolysis cell have particularly high catalytic activities in an anode reaction of water electrolysis when the molar ratio R is 0.25 or more and 0.5 or less.

Table 4 below shows an example of the relation between the oxygen evolution current (current density) at a potential of 1.65 V (vs. RHE) and the molar ratio Q (i.e., the molar ratio of ACAC to (Ni + Fe)).

**(Table 4)**

| | Molar ratio Q | Current density [mA cm⁻²] |
|---|---|---|
| Example 1 | 1/3 | 200 |
| Example 3 | 1/2.5 | 190 |
| Example 4 | 1/3.5 | 195 |
| Comparative Example 1 | 0 | 160 |

As shown in Table 4, the samples (Examples 1, 3, and 4) in which resolation proceeded in the synthesis of LDH nanoparticles by adopting an appropriate molar ratio Q had high current densities, about 1.25 times that of the sample (Comparative Example 1) not containing ACAC, in which resolation did not proceed.

By comprehensively considering Evaluations 1 to 6 above, it is inferred that the upper limit of an appropriate range of the molar ratio Q (i.e., the molar ratio of ACAC to (Ni + Fe)) in a solution is about 1/2.5. In addition, it is inferred that the lower limit of the appropriate range of the molar ratio Q is about 1/3.5.

### [Evaluation 7: Evaluation of performance by water electrolyzer]

The procedure and results of the electrolysis experiment by the water electrolyzer in Example 10 will now be described.

An alkaline aqueous solution was circulated in the system of a water electrolyzer by supplying the alkaline aqueous solution from the bottom of the fixing jig of the water electrolyzer and discharging the solution from the top to make the inside of the system alkaline. Incidentally, on this occasion, it was verified whether or not a uniform pressure was applied to the electrode portion of an MEA by using pressure sensitive paper and whether or not there was leakage of the circulating solution, and there was no problem in both verifications.

In this electrolysis test, the characteristics of each water electrolysis cell was evaluated by measuring the cell voltage when a current was applied by a constant-current electrolysis step method in which the applied current is changed at regular intervals. Incidentally, the electrolysis test with the water electrolyzer was performed successively by circulating, in the system, 1 M KOHaq (ordinary temperature), 1 M KOHaq (40°C), 1 M KOHaq (60°C), and 1 M KOHaq (80°C) in this order as the alkaline aqueous solution.

The results of the electrolysis test above, for example, when the alkaline aqueous solution was 1 M KOHaq (80°C), the voltage of the water electrolysis cell was 1.59 V when the current density was 1 A/cm². This corresponds to a high energy conversion efficiency (74.7%), comparable to 75%, in terms of the energy conversion efficiency.

### [Evaluation 8: Evaluation by thermal desorption-gas chromatography/mass spectrometry (TD-GC/MS)]

The catalyst mounted on the water electrolyzer in Example 10 was evaluated for whether or not ACAC was present by verifying the TD-GC/MS spectrum of the catalyst used in Example 10 using a thermal desorption-gas chromatography/mass spectrometer (TD-GC/MS, TurboMatrix ATD/Clarus SQ 8T/Clarus 680, manufactured by PerkinElmer Co., Ltd.). As a comparative sample, a commercially available ACAC reagent was used. The column heating conditions were holding 35°C for 5 min → rising the temperature to 100°C at a rate of 10°C/min → rising the temperature to 290°C at a rate of 20°C/min → holding 290°C for 19 min.

As a result, in the catalyst used in Example 10, a signal was detected at the same retention time as that in the ACAC reagent. In addition, the mass spectrum of the signal was the same as that of the ACAC reagent. The above demonstrated that ACAC was present in the catalyst mounted on the water electrolyzer in Example 10.

Incidentally, from the above description, many improvements and other embodiments of the present disclosure will be apparent to those skilled in the art. Accordingly, the above description should be construed as an example only and is provided for the purpose of teaching those skilled in the art the best aspect to carry out the present disclosure. The operation conditions, composition, structure, and/or function can be substantially changed without departing from the spirit of the present disclosure.

### Industrial Applicability

One aspect of the present disclosure can be used in an LDH that can exhibit a higher catalytic activity than before in an anode reaction of water electrolysis.

### Reference Signs List

- 10: host layer
- 20: guest layer
- 30: catalyst layer
- 31: electrolyte
- 32: catalyst layer
- 33: gas diffusion layer
- 34: gas diffusion layer
- 40: voltage application unit
- 50: LDH nanoparticle
- 200: water electrolysis cell
- 300: water electrolyzer
- AN: positive electrode
- CA: negative electrode

## Claims

1. A layered double hydroxide comprising:
two or more transition metals; and
a chelating agent, the layered double hydroxide having an average particle diameter of 100 nm or less.

2. The layered double hydroxide according to Claim 1, wherein the layered double hydroxide has an average particle diameter of 50 nm or less.

3. The layered double hydroxide according to Claim 1 or 2, wherein the layered double hydroxide has an average particle diameter of 10 nm or less.

4. The layered double hydroxide according to any one of Claims 1 to 3, wherein the two or more transition metals are two or more metals selected from V, Cr, Mn, Fe, Co, Ni, Cu, W, and Ru.

5. The layered double hydroxide according to any one of Claims 1 to 4, wherein the two or more transition metals include either Ni or Fe.

6. The layered double hydroxide according to any one of Claims 1 to 5, wherein
the two or more transition metals are composed of Ni and Fe, and
a ratio of an amount of Fe to a total amount of Ni and Fe is 0.25 or more and 0.5 or less.

7. The layered double hydroxide according to any one of Claims 1 to 6, wherein the chelating agent includes either acetylacetone or citrate.

8. The layered double hydroxide according to any one of Claims 1 to 7, wherein
the chelating agent is acetylacetone, and
the layered double hydroxide has an absorbance of 0.75 or more and 1.0 or less at 300 nm at an optical path length of 10 mm in ultraviolet-visible absorption spectroscopy (UV-vis).

9. The layered double hydroxide according to any one of Claims 1 to 8, wherein the layered double hydroxide has an average particle diameter of 10 nm or less measured by a small angle X-ray scattering method (SAXS).

10. The layered double hydroxide according to any one of Claims 1 to 9, wherein
the layered double hydroxide is represented by a composition formula: [M²⁺₁₋ₓM³⁺ₓ(OH)₂][yAⁿ⁻·mH₂O], and
the chelating agent is coordinated to the two or more transition metals,
in the compositional formula, M²⁺ being a divalent transition metal, M³⁺ being a trivalent transition metal, Aⁿ⁻ being an intercalating anion, m being an appropriate rational number, n being an integer, x being a rational number not exceeding 1, y being a number corresponding to charge balance requirement.

11. A catalyst for a water electrolysis cell, the catalyst comprising the layered double hydroxide according to any one of Claims 1 to 10.

12. A water electrolysis cell comprising:
a positive electrode containing the catalyst according to Claim 11;
a negative electrode; and
an electrolyte.

13. A water electrolysis cell comprising:
a positive electrode;
a negative electrode containing the catalyst according to Claim 11;
and an electrolyte.

14. A water electrolyzer comprising:
the water electrolysis cell according to Claim 12 or 13; and
a voltage application unit for applying a voltage to the positive electrode and the negative electrode.

15. A method for manufacturing a layered double hydroxide, the method comprising:
a step of preparing an aqueous solution containing ions of two or more transition metals and a chelating agent; and
a step of making the aqueous solution alkaline.

16. The method for manufacturing a layered double hydroxide according to Claim 15, the method further comprising:
a step of increasing pH of the alkaline aqueous solution.

17. The method for manufacturing a layered double hydroxide according to Claim 15, wherein the aqueous solution is made alkaline at ordinary temperature.

18. The method for manufacturing a layered double hydroxide according to Claim 16, wherein the pH of the alkaline aqueous solution is increased at ordinary temperature.

19. The method for manufacturing a layered double hydroxide according to any one of Claims 15 to 18, wherein the two or more transition metals are two or more metals selected from V, Cr, Mn, Fe, Co, Ni, Cu, W, and Ru.

20. The method for manufacturing a layered double hydroxide according to any one of Claims 15 to 19, wherein the two or more transition metals include either Ni or Fe.

21. The method for manufacturing a layered double hydroxide according to any one of Claims 15 to 20, wherein a complex of the transition metals and the chelating agent has a solubility of 2 g/L or more in water.

22. The method for manufacturing a layered double hydroxide according to any one of Claims 15 to 21, wherein the chelating agent includes either acetylacetone or citrate.

23. The method for manufacturing a layered double hydroxide according to any one of Claims 15 to 21, wherein the chelating agent is added at a concentration of 1/2.5 or less of a transition metal ion concentration.
